# EUROPÄISCHE PATENTSCHRIFT

(11) **EP 1 125 496 B1**
(45) Veröffentlichungstag und Bekanntmachung des Hinweises auf die Patenterteilung: **12.01.2005**
(21) Anmeldenummer: 00102307.6
(22) Anmeldetag: 03.02.2000
(51) Int. Cl.: A01N 25/16, A01N 33/12, E04B 1/72

(54) **Verfahren zur Schimmelpilzbekämpfung und Raumsanierung**
Process for combating mould and sanitation of cavities
Procédé pour combattre la moisissure et assainissement de cavités

(43) Veröffentlichungstag der Anmeldung: 22.08.2001
(73) Patentinhaber: Römer, Michael, 26382 Wilhelmshaven (DE)
(72) Erfinder: Römer, Michael, 26382 Wilhelmshaven (DE)
(74) Vertreter: Sartorius, Peter, Dipl.-Ing.

(56) Entgegenhaltungen:
- WO-A-93/02553
- WO-A-98/20094
- DE-A- 19 714 619
- GB-A- 1 274 442
- US-A- 5 804 641
- DATABASE WPI Section Ch, Week 197937 Derwent Publications Ltd., London, GB; Class A97, AN 1979-66973B XP002141848 & JP 54 098336 A (KYORITSU YUKI KOGYO), 3. August 1979 (1979-08-03)

## Beschreibung

**Die Erfindung bezieht sich auf** ein Verfahren zur Sanierung von durch Schimmelpilze geschädigten Wänden und/oder Hohlräumen mit einem aufgeschäumten und in den pilzkontaminierten Hohlraum eingebrachten Sanierungsmittel.

Bei einem Schimmelpilzbefall treten hauptsächlich zwei gravierende Probleme auf. Zum einen sind die Schimmelpilzsporen und -gewebe allergieerzeugende und allergieauslösende Partikel, und zum anderen produzieren Schimmelpilze während des Wachstums eine Vielzahl charakteristischer, z. T. gesundheitsschädlicher Stoffwechselprodukte, die flüchtig sind und in die Raumluft übertreten. Während sich die von den Schimmelpilzen erzeugten flüchtigen Stoffwechselprodukte meist als unangenehme Gerüche bemerkbar machen, kann das von den Schimmelpilzsporen ausgehende Gefährdungspotential weit über die o. g. allergieerzeugenden und allergieauslösenden Effekte hinausgehen und z. B. auch Endomykosen -Schimmelpilzwachstum in der Lunge bei Aspergillus fumigatus- beinhalten. Bei Schimmelpilzbefall kann eine Gesundheitsgefährdung von Sporen - lebend und tot -, dem Pilzmycel - Pilzfäden und gekeimte Sporen - und den von lebenden Schimmelzellen an die Umgebung abgegebenen flüchtigen Substanzen (MVOC) ausgehen. Im Mittelpunkt steht hierbei das allergieauslösende Potential der pilzlichen Eiweiße aus der Sporenhülle und dem Pilzmycel. Das Ziel der Sanierung ist die Herstellung eines Zustandes, bei dem das gesundheitliche Risiko der Raumnutzer und das Neubefallrisiko mit dem Urzustand vor dem Schimmelbefall gleichzusetzen sind.

**Es sind bereits** mehrere Verfahren zur Pilzbekämpfung bzw. Hohlraumsanierung bekannt. Aus der Druckschrift GB 1 274 442 ist ein Verfahren zur Pilzbekämpfung bekannt, das die Verwendung von Schaum als Trägermedium ohne Bindemittel für die verschiedenen chemischen Bestandteile des Schutzmittels vorsieht. Während Schimmelpilzbefall an Wänden und Decken gut durch Beseitigung der Feuchtigkeitsquellen und einer Behandlung mit geeigneten Schimmelbekämpfungsmitteln zu sanieren ist, gestaltet sich die Sanierung von Schimmelpilzbefall in Hohlräumen wie Hohlböden, Installationshohlräumen oder Luftschächten als äußerst aufwendiges Vorhaben. Die vom Schimmel bewachsenen Hohlräume müssen in der Regel zunächst durch bauliche Eingriffe geöffnet werden, bevor der Befall zugänglich wird und entfernt werden kann. Das Öffnen der schimmelbefallenen Hohlräume ist mit erheblichem Eingriff in die Bausubstanz, langen Nutzungsausfällen im Umfeld der Sanierungsziele und sehr hohem Aufwand verbunden.

Die Druckschrift US 5,804,641 bezieht sich auf ein Verfahren zum Schutz von Holzkonstruktionen vor Feuchtigkeit, Pilzen usw. mit einer flüssigen Emulsion unter der Verwendung von Copolymeren von Vinylacetat und Polyuretan. Danach kommt ein Schaummittel zum Einsatz, das als getrocknete, ausgehärtete Schaumbarriere zwischen der zu behandelnden Fläche und dem Boden verbleibt. Die in der US 5,804,641 offenbarten Bindemittel sind somit lediglich dazu da, dem Schaum eine gleichmäßige Konsistenz zu verleihen, damit der Wirkstoff an die zu behandelnde Stelle transportiert werden kann, danach hat er seine Funktion erfüllt. Mit diesem Verfahren soll nichts weiter erreicht werden. Der bekannte Schaum wird also lediglich als reines Transportmittel eingesetzt und entfaltet keine Langzeitwirkung. Die im Schaum enthaltenen Wirkstoffe können, nachdem sie in das Holz eingedrungen sind, die Termiten vernichten, dieses Mittel und auch das Verfahren kann nicht zur Schimmelbekämpfung eingesetzt werden. Im Dokument in Spalte 1, Zeile 58 ff. heißt es, dass das "synthetic resine in den Boden eindringt" und an anderer Stelle, Spalte 2, Zeile 25 bis 27 ist hierzu das "Termitenbekämpfungsmittel" angesprochen. Der ausgehärtete Schaum legt sich auf der Oberfläche ab und schließt die Schädlingsbekämpfungsmittel ein, die nur dann von den Insektiziden aufgenommen werden, wenn sich die Insektizide durch den Schaum hindurchfressen.

Die Druckschrift JP 54098336 zeigt die Verwendung einer lang anhaltenden Schaumdecke als Trägermedium für Insektizide oder Fungizide.

Die Druckschrift WO 98/20094 zeigt die Verwendung eines optischen Aufhellers als Zusatz für HautDesinfektionsmittel. Der Aufheller weist hierzu durch UV-Licht aktivierbare, fluoreszierende Stoffe zur Sichtbarmachung auf.

Die Druckschrift DE 197 14 619 A1 bezieht sich auf eine Vorrichtung zum Trocknen schwer zugänglicher Räume mit einem Gebläse und einem Mischelement zum Einbringen eines Wirkstoffs in den Luftstrom.

Die Druckschrift WO 93/02553 zeigt die Verwendung eines Schaums als Trägermittel für ein Pestizid. Nach dem Einbringen des Schaums löst sich dieser auf und es verbleibt eine Wirkung auf der Oberfläche.

In der folgenden Tabelle sind die bestehenden Vor- und Nachteile der einzelnen Anwendungstechniken im Hinblick auf eine Hohlraumbehandlung aufgezeigt.

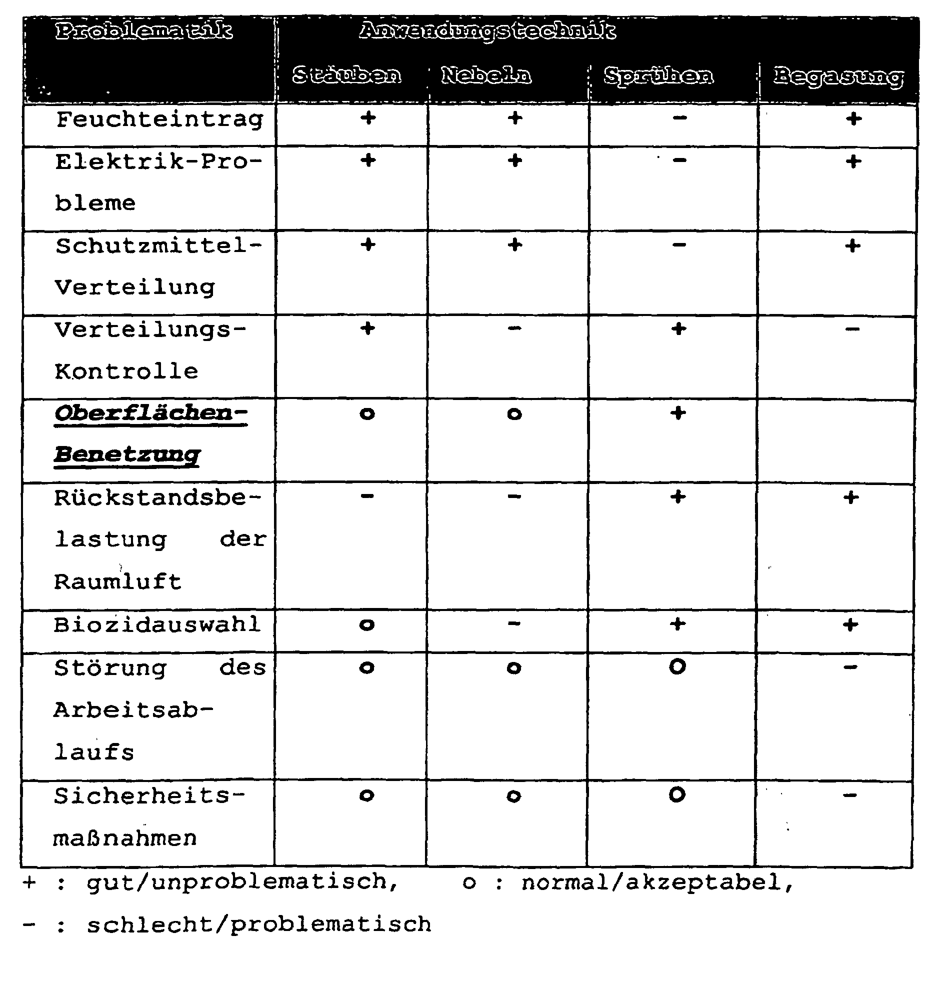

Eine sichere Methode zum Abtöten der Sporen und des Mycels stellt eine Begasungsmaßnahme mit einem geeigneten Gas (z. B. Methylenchlorid o. ä.) dar, das nach der Behandlung rückstandsfrei verschwindet. Da es sich bei den Begasungsmitteln entweder um krebserregende oder um giftige Arbeitsstoffe handelt, sind die Sicherheitsauflagen vor, während und nach der Verarbeitung sehr hoch und stellen einen erheblichen und spektakulären Eingriff in den Arbeitsablauf dar.

Das Sprühverfahren lässt sich nicht einsetzen, da die Stützen in den Hohlböden unregelmäßig verteilt sind und keine flächendeckende Applikation sichergestellt werden kann.

Über die Anwendungstechniken "Nebeln" und "Stäuben" kann zwar eine gleichmäßige Schutzmittelverteilung sichergestellt werden, beide Techniken führen aber in den Hohlböden bzw. Hohlräumen zu einer latenten Staubbelastung durch das Biozid und bergen die Gefahr einer Raumluftkontamination mit partikelgebundenen Bioziden. Daher kommen beide Applikationsverfahren - trotz einiger anwendungstechnischer Vorteile - aus Gründen des vorsorglichen Gesundheitsschutzes nicht in Frage.

**Der Erfindung liegt die Aufgabe zugrunde**, ein Schutzmittel bzw. eine wirkungsvolle Sanierungsmethode zu entwickeln, die die Schimmelpilzsporen entweder direkt oder zum Zeitpunkt der Sporenkeimung abtötet.

**Gelöst wird die Aufgabe erfindungsgemäß dadurch, dass** der Sanierungsmittelschaum zur Abtötung der Schimmelpilze ein Biozid und Emulgatoren aufweist und als Aktivschaum ausgebildet ist, wobei das Biozid bzw. der Aktivschaum einen unkritischen Dampfdruck aufweist, der so gering ist, dass bei Raumluftbedingungen der Übertritt des Biozids in die Gasphase verhindert wird, wobei das Sanierungsmittel, das gegebenenfalls einen farblich und/oder fluoreszierend ausgebildeten Markierstoff aufweist, nach dem Einbringen in den Hohlraum kollabiert und zur mechanischen Fixierung der Schimmelpilzkomponenten urethanmodifizierte Alkydharze und/oder acrylatmodifizierte Alkydharze als Bindemittel aufweist, so dass ein die Schimmelpilze zu bekämpfender bzw. fixierender Schutzfilm auf der Oberfläche gebildet wird.

Hierdurch wird erreicht, dass im Gegensatz zu der bislang üblichen vollständigen Öffnung und Reinigung der pilzkontaminierten Hohlräume bei diesem Verfahren der pilzkontaminierte Hohlraum mit einem geeigneten Schutzmittel ausgeschäumt wird. Mit dem erfindungsgemäßen Verfahren zur Sanierung von Schimmelpilzbefall in Hohlräumen kann das Öffnen der schimmelbefallenen Hohlräume weitestgehend vermieden und der Eingriff in die Bausubstanz sowie die Nutzungsausfälle auf ein Minimum herabgesetzt werden. Die Sanierung über das Schaumverfahren bietet erhebliche Vorteile hinsichtlich des Aufwands für Sicherheitsmaßnahmen und der Störung des Arbeitsablaufs.

Vorteilhaft ist es hierzu auch, dass das Sanierungsmittel in den Hohlraum raumfüllend eingebracht wird und dass das aufgeschäumte Sanierungsmittel nach dem Einbringen in den Hohlraum kollabiert und einen Schutzfilm bildet. Der Sanierungsmittelschaum breitet sich hierbei im jeweiligen Hohlraum zu allen Seiten hin aus. Auch baulich bedingte Hinterschneidungen, Tunnel oder Sacklöcher werden durch den sich ausbreitenden Schaum mit dem Sanierungsmittelschaum gefüllt.

Da das Sanierungsmittel als Aktivschaum ausgebildet ist, breitet es sich nach dem Einbringen des Sanierungsmittelschaums in den Hohlraum weiter von selbst aus bzw. verdichtet sich.

Ein weiteres Ziel des Verfahrens ist es, dass das Sanierungsmittel in Form eines Schutzfilms über den Schimmelpilz oder die Schädlinge gebracht wird bzw. einen Schutzfilm bildet und dabei die Schädlinge oder Schimmelpilze abtötet und fixiert. Der zunächst feuchte Schutzfilm hat aufgrund seiner Wirkstoffe eine abtötende Eigenschaft. Nach einiger Zeit trocknet der Schutzfilm ab und erhält aufgrund verschiedener Bindemittel eine den Schimmelpilz fixierende Eigenschaft.

Hierzu ist es von Vorteil, dass das Sanierungsmittel Wasser und ein oder mehrere Tenside zur Schaumbildung, ein oder mehrere Biozide zur Abtötung der Schimmelpilze und ein oder mehrere Bindemittel zur Fixierung der Schimmelpilzkomponenten enthält, wobei das Bindemittel urethanmodifizierte und/oder acrylatmodifizierte Alkydharze enthält. Zur Wiederherstellung des Urzustands vor dem Schimmelpilzbefall im Hohlraum sollte eine möglichst flächendeckende Verteilung des biozidhaltigen Schutzfilms stattfinden. Die Kontrolle der Schutzmittelverteilung im Hohlboden ist' über die Markierung bzw. Anfärbung des Mittels möglich. Als Kontrollfarbstoff ist Fluoreszin oder ein vergleichbarer, im UV-Licht fluoreszierender Farbstoff vorgesehen. Diese Methode hat den Vorteil, dass Schutzmittelrückstände, die bei der Verarbeitung des Schaums möglicherweise an die Wand und auf den Fußboden gelangen, keine sichtbaren Verfärbungen hervorrufen. Auch Installationen im Hohlraum bleiben farblich unverändert. Über die Einstrahlung von ultraviolettem Licht ist somit jederzeit eine visuelle Kontrolle der Schutzmittelverteilung möglich. Der unkritische Dampfdruck verhindert nach dem Einbringen bzw. während des Abtrocknens des Sanierungsmittels, dass größere Mengen in die Raumluft abdampfen und diese kontaminieren.

In Bezug auf das vorgenannte Verfahren ist es von Vorteil, dass das Mittel zur Schaumbildung ein oder mehrere ionische und/oder anionische Tenside und/oder Schaumbildner wie Alkylsulfat und/oder Alkylsulfonat aufweist oder mindestens aus Na-Lauryl-Sulfat besteht. Andere Schaumbildner als Ergänzung sind auch möglich.

Vorteilhaft ist es ferner, dass das Sanierungsmittel zur mechanischen Fixierung und Abtötung der Schimmelpilzkomponenten ein oder mehrere ionische und/oder anionische Tenside und/oder Schaumbildner wie Alkylsulfat und/oder Alkylsulfonat aufweist.

Zudem ist es vorteilhaft, dass das Sanierungsmittel zur Abtötung der Schädlinge ein oder mehrere Biozide wie Benzalkoniumchlorid und/oder Borat aufweist.

Hierzu ist es vorteilhaft, dass das Sanierungsmittel ein Biozid mit schimmelwidriger und/oder schimmelabtötender Wirkung ist und dass das Biozid ein Fungizid ist.

Ein zu diesem Zweck geeignetes Mittel setzt sich also zusammen aus Wasser, einem oder mehreren Tensiden zur Erzeugung des Schaums, einem oder mehreren geeigneten Bioziden zur Abtötung der Schimmelpilze und einem oder mehreren geeigneten Bindemitteln zur mechanischen Fixierung der Schimmelpilze auf dem Untergrund. Filmbildner, Tenside und Markierstoffe stellen rein formulierungstechnische Details dar, über die die gewünschte Schaumeigenschaft ganz gezielt eingestellt wird. Das schimmelpilzwidrige bzw. abtötende Biozid erfüllt dagegen sehr hohe Anforderungen, da es in unmittelbarer Nähe des Arbeitsplatzes eingebracht und auf Dauer deponiert wird: Es weist einen äußerst geringen Dampfdruck und dadurch eine vernachlässigbare Abgabe in die Raumluft auf. Es besitzt eine unproblematische Toxikologie und ein ausgeglichenes Wirksamkeitsspektrum gegenüber den vorgefundenen Schimmelpilzfamilien.

Durch die Einbindung des Benzalkoniumchlorids in den Schutzmittelfilm ist eine Reduktion der Wirksamkeit durch die Einmantelung bzw. Schutzfilmbildung des Wirkstoffs zu erwarten. Die Bioverfügbarkeit des Wirkstoffs bleibt dennoch erhalten, da im Fall des Wasserzutritts bzw. aufgrund der Luftfeuchtigkeit ein Ausspülungseffekt hinzukommt.

Zugunsten der toxikologischen Unbedenklichkeit sollte auf den Einsatz hochwirksamer Biozide verzichtet und auf einen sehr gut wirksamen Wirkstoff aus der Gruppe der quaternären Ammoniumverbindungen, nämlich Benzalkoniumchlorid, zurückgegriffen werden. Andere wie die oben genannten Biozide können in unbedenklichen Einsatzgebieten auch eingesetzt werden.

**Weitere Vorteile und Einzelheiten der Erfindung sind in den Patentansprüchen** und in der Beschreibung erläutert und in den Figuren dargestellt. Es zeigt:
- Fig. 1: eine schematische Darstellung eines freien Sporenrasens mit Pilzmycel,
- Fig. 2: eine schematische Darstellung eines Sporenrasens, mit Sanierungsmittelschaum überdeckt,
- Fig. 3: eine schematische Darstellung eines Sanierungsmittelfilms über dem Sporenrasen.

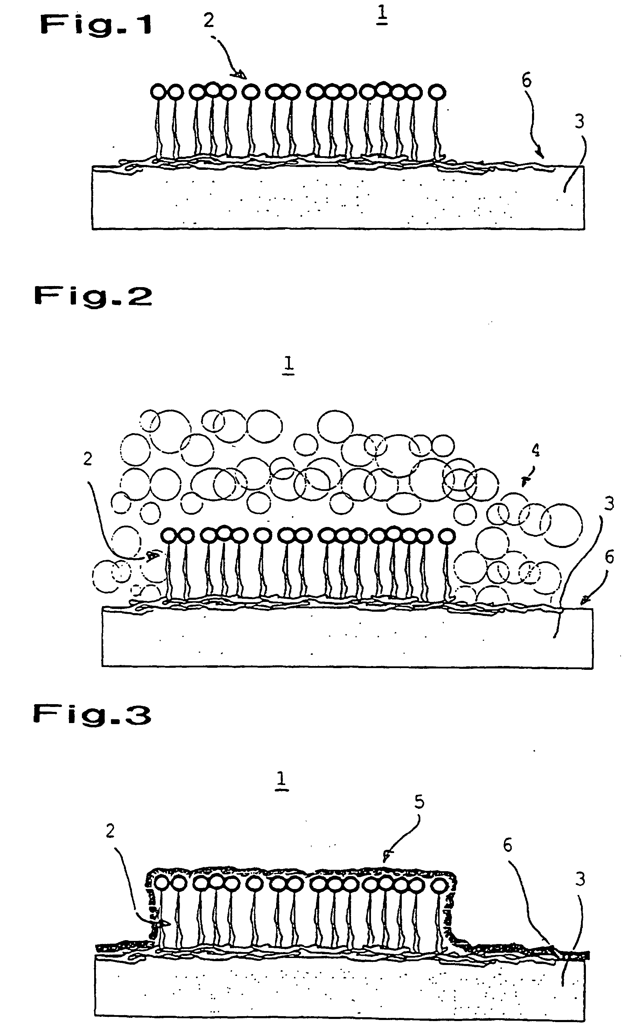

Der in Fig. 1 dargestellte Sporenrasen 2 belegt die Oberfläche einer Wand 3 bzw. eines Hohlraums 1 sowie nahezu alle darin befindlichen Bauteile. Der Sporenrasen 2 weist ein Pilzmycel auf, das teilweise in die Wand 3 und die _{P}oren der befallenen Oberflächen 6 eindringt. Sichtbar auf der Oberfläche 6 befinden sich die Pilzsporen 2, die sich als sogenannter Schimmel sichtbar auf der Oberfläche 6 ausbreiten.

Der zu sanierende Hohlraum 1 bzw. die Oberfläche 6 wird nun mit Schutzmittelschaum 4 ausgefüllt, der zunächst den gesamten Hohlraum 1 ausfüllt und damit auch alle Oberflächen 6 belegt. Auf diese Weise wird gemäß Fig. 2 der Sporenrasen 2 vom Schutzmittelschaum 4 umschlossen.

Der Schutzmittelschaum 4 gemäß Fig. 3 kollabiert nach einiger Zeit und hinterläßt auf den Oberflächen einen dünnen Film 5, der gemäß Fig. 3 über die Bindemittelkomponente den Sporenrasen 2 mechanisch bindet und über die Biozidkomponente das Pilzgewebe und auskeimende Sporen abtötet.

Der dünne Film 5 härtet langsam aus und fixiert sowohl das Sanierungsmittel als auch die Pilzsporen 2 sowie das Pilzmycel vor Ort. Es ist zu erwarten, daß Teile des Sporenrasens 2 durch die erhöhte Feuchte während der Trocknungsphase des Sanierungsmittelschaums 4 mit der Keimung beginnen. Diese werden aber durch das Sanierungsmittel abgetötet.

Durch die Einbindung des Benzalkoniumchlorids in den Sanierungsmittelfilm 5 gemäß Fig. 3 ist eine Reduktion der Wirksamkeit durch die Einmantelung bzw. die Filmbildung des Wirkstoffs zu erwarten. Die Verfügbarkeit des Wirkstoffs bleibt dennoch erhalten, da im Fall des Wasserzutritts bzw. durch die Luftfeuchte ein Ausspülungseffekt hinzukommt.

Während der Verschäumung und der Filmbildung in den Hohlräumen 1 wird ein leichter Eigengeruch durch die eingesetzten Binde- und Hilfslösungsmittel auftreten, der nach kurzer Zeit verschwindet.

## Patentansprüche

1. Verfahren zur Sanierung von durch Schimmelpilze (2) geschädigten Wänden (3) und/oder Hohlräumen (1) mit einem aufgeschäumten und in den pilzkontaminierten Hohlraum eingebrachten Sanierungsmittel (4), **dadurch gekennzeichnet, dass** der Sanierungsmittelschaum (4) zur Abtötung der Schimmelpilze ein Biozid und Emulgatoren aufweist und als Aktivschaum ausgebildet ist, wobei das Biozid bzw. der Aktivschaum einen unkritischen Dampfdruck aufweist, der so gering ist, dass bei Raumluftbedingungen der Übertritt des Biozids in die Gasphase verhindert wird, wobei das Sanierungsmittel (4), das gegebenenfalls einen farblich und/oder fluoreszierend ausgebildeten Markierstoff aufweist, nach dem Einbringen in den Hohlraum kollabiert und zur mechanischen Fixierung der Schimmelpilzkomponenten urethanmodifizierte Alkydharze und/oder acrylatmodifizierte Alkydharze als Bindemittel aufweist, so dass ein die Schimmelpilze zu bekämpfender bzw. fixierender Schutzfilm auf der Oberfläche gebildet wird.

2. Sanierungsmittel enthaltend Wasser und ein oder mehrere Tenside zur Schaumbildung, ein oder mehrere Biozide zur Abtötung der Schimmelpilze und ein oder mehrere Bindemittel zur Fixierung der Schimmelpilzkomponenten, **dadurch gekennzeichnet, dass** das Bindemittel urethanmodifizierte und/oder acrylatmodifizierte Alkydharze enthält.

3. Sanierungsmittel nach Anspruch 2, **dadurch gekennzeichnet, dass** das Mittel zur Schaumbildung ein oder mehrere ionische und/oder anionische Tenside und/oder Schaumbildner wie Alkylsulfat und/oder Alkylsulfonat aufweist oder mindestens aus Na-Lauryl-Sulfat besteht.

4. Sanierungsmittel nach einem der vorhergehenden Ansprüche, **dadurch gekennzeichnet, dass** das Sanierungsmittel (4) zur mechanischen Fixierung und Abtötung der Schimmelpilzkomponenten ein oder mehrere ionische und/oder anionische Tenside und/oder Schaumbildner wie Alkylsulfat und/oder Alkylsulfonat aufweist.

5. Sanierungsmittel nach einem der vorhergehenden Ansprüche, **dadurch gekennzeichnet, dass** das Sanierungsmittel (3) zur Abtötung der Schädlinge ein oder mehrere Biozide wie Benzalkoniumchlorid und/oder Borat aufweist.

6. Sanierungsmittel nach einem der vorhergehenden Ansprüche, **dadurch gekennzeichnet, dass** das Sanierungsmittel ein Biozid mit schimmelwidriger und/oder schimmelabtötender Wirkung ist.

7. Sanierungsmittel nach einem der vorhergehenden Ansprüche, **dadurch gekennzeichnet, dass** das Biozid ein Fungizid ist.

## Claims

1. A method for remediating walls (3) and/or cavities (1) damaged by mould fungi (2) using a foamed remediating agent (4) inserted into the fungus-contaminated cavity, **characterised in that** the remediating agent foam (4) has a biocide and emulsifiers for killing the mould fungi and is constructed as active foam, wherein the biocide or the active foam has an uncritical vapour pressure which is so low that under room-air conditions, transfer of the biocide into the gas phase is prevented, wherein the remediating agent (4) which if necessary has a marking substance constructed as coloured and/or fluorescent, collapses after insertion into the cavity and has urethane-modified alkyd resins and/or acrylate-modified alkyd resins as binders for mechanical fixing of the mould fungus components so that a protective film to combat or fix the mould fungi is formed on the surface.

2. A remediating agent containing water and one or a plurality of tensides for foam formation, one or a plurality of biocides for killing the mould fungi and one or a plurality of binders for fixing the mould fungi components, **characterised in that** the binder contains urethane-modified and/or acrylate-modified alkyd resins.

3. The remediating agent according to claim 2, **characterised in that** the means for foam formation has one or a plurality of ionic and/or anionic tensides and/or foaming agents such as alkyl sulphate and/or alkyl sulphonate or consists at least of Na lauryl sulphate.

4. The remediating agent according to any one of the preceding claims **characterised in that** the remediating agent (4) for mechanical fixing and killing the mould fungus components has one or a plurality of ionic and/or anionic tensides and/or foaming agents such as alkyl sulphate and/or alkyl sulphonate.

5. The remediating agent according to any one of the preceding claims **characterised in that** the remediating agent (3) for killing the parasites has one or a plurality of biocides such as benzalkonium chloride and/or borate.

6. The remediating agent according to any one of the preceding claims **characterised in that** the remediating agent is a biocide with a mould-repellent and/or fungicidal effect.

7. The remediating agent according to any one of the preceding claims **characterised in that** the biocide is a fungicide.

## Revendications

1. Procédé d'assainissement de murs (3) et/ou de cavités (1) abîmés par des moisissures (2) à l'aide d'un produit d'assainissement (4) moussant introduit dans la cavité contaminées par des champignons, **caractérisé en ce que** le produit moussant d'assainissement (4) présente un biocide et des émulsifiants afin d'éliminer les moisissures et se présente sous forme d'une mousse active, le biocide ou la mousse active présentant une pression de vapeur non critique qui est de niveau assez faible pour empêcher, dans des conditions d'air ambiant, le passage du biocide en phase gazeuse, le produit d'assainissement (4), qui présente le cas échéant un agent de marquage coloré et/ou fluorescent, collabant après introduction dans la cavité et présentant en tant que liants, pour la fixation mécanique des composants des moisissures, des résines alkydes modifiées à l'uréthane et/ou des résines alkydes modifiées à l'acrylate, de manière à former sur la surface un film protecteur pour combattre ou fixer les moisissures.

2. Produit d'assainissement contenant de l'eau et un ou plusieurs agents tensioactifs pour former de la mousse, un ou plusieurs biocides pour éliminer les moisissures et un ou plusieurs liants pour fixer les composants des moisissures, **caractérisé en ce que** le liant contient des résines alkydes modifiées à l'uréthane et/ou des résines alkydes modifiées à l'acrylate.

3. Produit d'assainissement selon la revendication 2, **caractérisé en ce que** l'agent de formation de mousse présente un ou plusieurs agents tensioactifs et/ou moussants ioniques et/ou anioniques, tels que du sulfate d'alkyle et/ou du sulfonate d'alkyle ou est composé au moins de Na-lauryle-sulfate.

4. Produit d'assainissement selon l'une quelconque des revendications précédentes, **caractérisé en ce que** le produit d'assainissement (4) servant à fixer mécaniquement et à éliminer les composants des moisissures présente un ou plusieurs agents tensioactifs et/ou moussants ioniques et/ou anioniques, tels que du sulfate d'alkyle et/ou du sulfonate d'alkyle.

5. Produit d'assainissement selon l'une quelconque des revendications précédentes, **caractérisé en ce que** le produit d'assainissement (3) servant à éliminer les parasites présente un ou plusieurs biocides tels que du chlorure de benzalconium et/ou du borate.

6. Produit d'assainissement selon l'une quelconque des revendications précédentes, **caractérisé en ce que** le produit d'assainissement est un biocide à effet inhibiteur de moisissure et/ou éliminateur de moisissure.

7. Produit d'assainissement selon l'une quelconque des revendications précédentes, **caractérisé en ce que** le biocide est un fongicide.
